# EUROPÄISCHE PATENTSCHRIFT

(11) **EP 3 889 709 B1**
(45) Veröffentlichungstag und Bekanntmachung des Hinweises auf die Patenterteilung: **24.09.2025**
(21) Anmeldenummer: 21165629.3
(22) Anmeldetag: 29.03.2021
(51) Int. Cl.: G05B 19/409

(54) **HOLZBEARBEITUNGSSYSTEM UND BETRIEBSVERFAHREN**
WOOD PROCESSING SYSTEM AND METHOD OF OPERATION
SYSTÈME DE TRAITEMENT DU BOIS ET PROCÉDÉ DE FONCTIONNEMENT

(30) Priorität: 03.04.2020 DE 202020101832 U; 24.11.2020 DE 202020106737 U
(43) Veröffentlichungstag der Anmeldung: 06.10.2021
(73) Patentinhaber: Otto Martin Maschinenbau GmbH & Co. KG, 87724 Ottobeuren (DE)
(72) Erfinder: BALOM, Josef, 89081 Ulm (DE); JANSEN, Georg, 87724 Ottobeuren (DE); FELBER, Christian, 87527 Sonthofen (DE)
(74) Vertreter: ERNICKE Patent- und Rechtsanwälte PartmbB

(56) Entgegenhaltungen:
- EP-A1- 2 998 811
- WO-A2-03/088011
- DE-U1- 202009 006 993
- DE-U1- 202013 011 913
- US-A1- 2019 034 025

## Beschreibung

Die Erfindung betrifft ein Holzbearbeitungssystem und ein Betriebsverfahren mit den Merkmalen im Oberbegriff der selbstständigen Ansprüche.

Aus der Praxis sind Holzbearbeitungsmaschinen, **z.B.** Tischkreissägen, bekannt, die ein angetriebenes und ggf. einachsig oder mehrachsig verstellbares Bearbeitungswerkzeug, eine Maschinensteuerung und eine fest an der Holzbearbeitungsmaschine angeordnete Bedieneinrichtung aufweisen. Ferner können ein oder mehrere Nebenaggregate, **z.B.** Anschläge, Stelleinrichtungen oder dgl., vorhanden sein. Die Bedieneinrichtung weist eine Bedienmittelgruppe mit mehreren Tastern oder Schaltern und eine Anzeige auf. Die Holzbearbeitungsmaschine wird ausschließlich über die maschinenfeste Bedieneinrichtung bedient.

Die EP 2 998 811 A1 offenbart ein Bearbeitungszentrum für mit einer Schneidmaschine und einer als Schaltschrank ausgebildeten elektronische Maschinensteuerung **E,** die außerhalb und mit Abstand neben der Schneidmaschine am Boden angeordnet und durch ein flexibles Kabel mit der Schneidmaschine verbunden ist. Die Maschinensteuerung E weist ein human-machine-interface (HMI) mit einem Not-Aus-Schalter auf. Mit einer Detektionseinrichtung mit einem Fühler oder einem tragbaren Computer T können Profil- und Formvorgaben für das aus einer Platte herauszuschneidende Werkstück ermittelt, in einer processing unit aufbereitet und dann der elektronischen Maschinensteuerung E übermittelt werden, die auf Basis dieser Daten erst ein Programm zur Erstellung eines Bearbeitungszyklus generiert und diesen ohne menschlichen Eingriff automatisch ausführt.

Die DE 20 2013 011 913 U1 befasst sich mit einer Industrieanlage und der Roboterbestückung von Werkstücken mit Bauteilen. Die Industrieanlage gliedert sich in mehrere Funktionsgruppen, die vor Ort durch einen mobilen Tablet-Computer uneingeschränkt bedient werden können. An den Funktionsgruppen kann jeweils eine Not-Aus-Vorrichtung mit einem Not-Aus-Schalter angeordnet sein, die entfällt, wenn der Not-Aus-Schalter auf den Tablet-Computer als Steuerelement verlagert wird.

Die US 2019/0034025 A1 betrifft ein Maschinenbedienpanel, das aus einem mobilen Tablet-Computer und einer Computer-Steckaufnahme mit Bedienmitteln zusammen,besteht, wobei die Computer-Steckaufnahme die über ein USB-Interface mit irgendeiner Maschinensteuerung verbunden werden kann.

Es ist Aufgabe der vorliegenden Erfindung, eine verbesserte Holzbearbeitungstechnik aufzuzeigen.

Die Erfindung löst diese Aufgabe mit den Merkmalen in den selbstständigen Ansprüchen.

Die beanspruchte Holzbearbeitungstechnik, d.h. das Holzbearbeitungssystem, die Holzbearbeitungsmaschine, das Betriebsverfahren und ein Softwareprogrammprodukt, haben verschiedene Vorteile.

Die Aufgabe wird erfindungsgemäß gelöst durch ein Holzbearbeitungssystem gemäß Patentanspruch 1 sowie durch ein Verfahren gemäß Patentanspruch 12.

Der Bediener steht dabei direkt an der Holzbearbeitungsmaschine.

Unter einem Auslösen wird ein Aktivieren und ggf. Deaktivieren von sicherheitsrelevanten Komponenten, z.B. Bearbeitungswerkzeug, Nebenaggregaten oder sog. Maschinenachsen, der Holzbearbeitungsmaschine verstanden. Dies betrifft z.B. das Starten und Stoppen eines Holzbearbeitungswerkzeugs, insbesondere seines Antriebs, das Stillsetzen der Holzbearbeitungsmaschine im Notfall und ggf. das Starten und Stoppen von ein oder mehreren Nebenaggregaten oder angetriebenen Maschinenachsen.

Das beanspruchte Holzbearbeitungssystem umfasst mindestens die für eine drahtlose Kommunikation ausgerüstete Holzbearbeitungsmaschine. Das Holzbearbeitungssystem kann zusätzlich ein computerseitiges Softwareprogrammprodukt beinhalten. Dieses kann auf dem tragbaren Computer empfangen und ggf. gespeichert sowie von einem Bediener ausgeführt werden. Mit dem Softwareprogrammprodukt kann die Holzbearbeitungsmaschine mittels der drahtlosen Kommunikation bedient und gesteuert werden.

Der Funktionsumfang des Softwareprogrammprodukts und des tragbaren Computers ist vorzugsweise beschränkt. Er umfasst nicht die besagte Auslösefunktion. Zum Auslösen sind die ein oder mehreren Bedienmittel an der maschinenfesten Bedieneinrichtung vorgesehen und ausgebildet.

Das Softwareprogrammprodukt kann eine sogenannte App sein. Das Softwareprogrammprodukt kann eine eigenständige erfinderische Bedeutung haben.

Das beanspruchte Holzbearbeitungssystem ermöglicht eine komfortablere, schnellere und ergonomischere Bedienung der Holzbearbeitungsmaschine. Die Bedienmittelgruppe und die ein oder mehreren Bedienmittel können auf die besagte Auslösefunktion reduziert und beschränkt sein.

Einige, vorzugsweise alle, anderen Einstellungen bzw. Vorgaben an der Holzbearbeitungsmaschine können mit dem tragbaren Computer und dem computerseitigen Softwareprogrammprodukt vorgenommen werden. Dies können z.B. Einstellungen von Schnitthöhe, Drehzahl und evtl. Schwenkwinkel eines Holzbearbeitungswerkzeugs, z.B. eines rotierenden Sägeblatts, sein. Andere Einstellungen können die vorzugsweise vorhandenen ein oder mehreren Nebenaggregate, z.B. verstellbare Anschläge, Stelleinrichtungen, eine Absaugeinrichtung oder dgl. betreffen. Die Einstellungen bzw. Vorgaben bewirken per se noch keine Bewegung des Holzbearbeitungswerkzeugs oder ggf. einer Maschinenachse. Sie werden erst wirksam, wenn die vorgenannte Auslösung erfolgt ist.

Das beanspruchte Holzbearbeitungssystem kann außer der Holzbearbeitungsmaschine auch den tragbaren Computer enthalten. Dieser kann zum Lieferumfang des Holzbearbeitungssystems gehören. Der tragbare Computer kann lieferseitig mit dem besagten Softwareprogrammprodukt ausgestattet sein. Der tragbare Computer kann alternativ beim Kunden bzw. Bediener bereits vorhanden sein. Er kann mit dem vom Lieferanten des Holzbearbeitungssystems bereit gestellten computerseitigen Softwareprogrammprodukt ausgestattet werden. In weiterer Abwandlung kann das computerseitige Softwareprogrammprodukt von einem Dritten, z.B. einem Softwarehaus, geliefert werden.

Der tragbare Computer kann z.B. als dedizierter Computer speziell für die Holzbearbeitungsmaschine oder als Consumer-Computer, z.B. als handelsübliches Tablet, ausgebildet sein. Ein z.B. bedienerseitig bereits vorhandener oder mitgelieferter Consumer-Computer kann durch das computerseitige Softwareprogrammprodukt in seiner Funktion und seinen Einsatzmöglichkeiten aufgewertet werden. Er kann eine Mehrfachfunktion haben und kann z.B. vom Bediener auch für andere Aufgaben, z.B. an der Holzbearbeitungsmaschine oder für andere Zwecke, eingesetzt werden.

Das Holzbearbeitungssystem und das computerseitige Softwareprogrammprodukt können z.B. eine Schnittoptimierungs-Software und/oder eine Gestaltungs-Software und/oder eine Vertriebs-Software und/oder eine Planungs-Software für Holzprodukte, ein Datenbanksystem oder dgl. umfassen. Ferner kann eine Wartungs-Software enthalten sein. Diese Softwarekomponenten können jeweils Bestandteil des herstellerseitig gelieferten Softwareprogrammprodukts sein. Sie können alternativ bedienerseitig bereits vorhanden sein bzw. von einem Dritten geliefert werden.

Eine oder mehrere der genannten Softwarekomponenten, insbesondere die Wartungs-Software, kann/können z.B. mit einer Erfassungssoftware, insbesondere Bilderkennungs-Software, gekoppelt sein, z.B. unter Nutzung von künstlicher Intelligenz oder Computer-Augmented Reality. Ein z.B. mit der computereigenen oder zusätzlichen Kamera optisch oder auf andere Weise erfasstes Maschinenteil, Holzprodukt oder dgl. kann erkannt werden, wobei dann zugehörige Wartungsanweisungen, Ersatzteillisten, Bedienungsanleitungen, Schnittanweisungen, Bearbeitungsanweisungen oder dgl. Informationen am tragbaren Computer in geeigneter Weise, z.B. optisch und/oder akustisch, angezeigt werden. Ferner ist es möglich, auf Basis der Erkennung automatisch Steuerbefehle für Maschineneinstellungen an die Holzbearbeitungsmaschine (2) zu übermitteln.

Das Holzbearbeitungssystem kann ein maschinenseitiges Softwareprogrammprodukt umfassen, welches im Zusammenwirken mit dem tragbaren Computer und der drahtlosen Kommunikationsschnittstellen den Ablauf eines Steuerverfahrens auf der Holzbearbeitungsmaschine, insbesondere auf deren Maschinensteuerung, ermöglicht. Das maschinenseitige Softwareprogrammprodukt kann z.B. in einem Datenspeicher der Maschinensteuerung gespeichert sein.

Die drahtlose Kommunikationsschnittstelle der Holzbearbeitungsmaschine kann sich an beliebig geeigneter Stelle befinden, z.B. auf einer Platine der Maschinensteuerung. Sie kann fest montiert oder austauschbar sein. Die drahtlose Kommunikationsschnittstelle kann Empfänger und ggf. Sender für Signale enthalten. Eine Antenne kann integriert oder separat, z.B. am Maschinengestell, angeordnet sein. Die drahtlose Kommunikationsschnittstelle kann bei der gelieferten Holzbearbeitungsmaschine vorgerüstet sein. Die computerseitige Kommunikationsschnittstelle kann entsprechend ausgebildet sein.

Die drahtlose Kommunikationsschnittstelle kann für ein oder mehrere Kommunikationsverfahren und Kommunikationsprotokolle ausgebildet sein. Sie kann z.B. per Funk, Bluetooth, WLAN, Infrarot oder dgl. mit dem tragbaren Computer und dessen drahtloser Kommunikationsschnittstelle kommunizieren.

Die vorstehend genannte und bevorzugt reduzierte Bedienmittelgruppe kann Bedienmittel für eine Funktionsauslösung von Komponenten der Holzbearbeitungsmaschine umfassen, z.B. von einem einzeln oder mehrfach vorhandenen Bearbeitungswerkzeug, von einem oder mehreren Nebenaggregat(en) oder dgl. In der bevorzugten Ausführungsform ist ein Bedienmittel zum Starten und Stoppen des Bearbeitungswerkzeugs vorhanden. Ein anderes Bedienmittel kann für einen Not-Halt vorgesehen sein. Ferner kann ein Bedienmittel die Funktion eines Nebenaggregats auslösen. Die Bedienmittel können jeweils einteilig oder mehrteilig ausgebildet sein.

Die Einstellungen können, wie gesagt, über den tragbaren Computer vorgenommen werden. Das Auslösen der Maschinenfunktionen erfolgt jedoch an der maschinenfesten Bedieneinrichtung und den besagten Bedienmitteln. Dies hat den Vorteil, dass sicherheitskritische Vorgänge nur vor Ort an der Maschine ausgelöst bzw. gestartet und gestoppt werden können. Fehlbedienungen können vermieden werden. Die auslösenden Bedienmittel sind dazu ausgebildet, dass sie eine kontaktierende manuelle Bedienung vor Ort an der Holzbearbeitungsmaschine verlangen. Dies bedingt einen Bediener an der Holzbearbeitungsmaschine, der die aktuelle Betriebssituation erfassen und für die Bedienung auswerten kann. Die Bedienmittel können z.B. als manuelle Taster oder Schalter ausgeführt sein.

Die maschinenfeste Bedieneinrichtung kann außerdem eine Anzeige aufweisen. Diese kann in beliebig geeigneter Weise, z.B. als Bildschirm, ausgebildet sein. Sie kann eine gegenüber dem eingangs genannten Stand der Technik reduzierte Größe und einen verringerten Anzeigeumfang aufweisen.

Der tragbare Computer ist üblicherweise mit einem Bildschirm, insbesondere einem Touchscreen, ausgestattet. Dieser Bildschirm kann mittels drahtloser Kommunikation für die Anzeige von Maschinenfunktionen, Einstellungen, Bedienmitteln, Quittungssignalen oder dgl. zur Bedienung der Holzbearbeitungsmaschine ausgestattet sein. Mit dem computerseitigen Softwareprogrammprodukt können Bilder und/oder Symbole des Bearbeitungswerkzeugs und/oder der ggf. ein oder mehreren Nebenaggregate sowie ggf. Bedienelemente hierfür dargestellt werden. Am tragbaren Computer, insbesondere am Touchscreen, können Einstellbefehle eingegeben werden. Dies kann dank des mobilen Computers an beliebiger Stelle, insbesondere auch vor Ort an der Holzbearbeitungsmaschine, erfolgen.

Der Bildschirm des tragbaren Computers kann die bevorzugt reduzierte Anzeige der maschinenfesten Bedieneinrichtung ergänzen. Dies hat wirtschaftliche und ergonomische Vorteile. Der bisher übliche fest eingebaute große Bildschirm an der maschinenfesten Bedieneinrichtung kann kostensparend auf die besagte Anzeige reduziert werden. Andererseits ist der tragbare Computer mit dem Bildschirm mobil und kann von der Holzbearbeitungsmaschine entfernt werden. Eingaben am tragbaren Computer können z.B. außerhalb der Werkstatt an einem Schreibtisch oder an anderer, von der Holzbearbeitungsmaschine entfernter Stelle vorgenommen werden. Bei einer gemeinsamen Anordnung an der Bedieneinrichtung bieten die maschinenseitige Anzeige und der computerseitige Bildschirm zusammen einen optimalen und großen Darstellungsumfang mit verteilten Informationen und ggf. Eingabefunktionen.

Die Holzbearbeitungsmaschine weist eine Halterung für den tragbaren Computer auf. Die Halterung ist an der Bedieneinrichtung angeordnet. Der tragbare Computer kann mit seinem Bildschirm damit vor Ort neben der Bedienmittelgruppe und der evtl. vorhandenen Anzeige angeordnet sein. Die Bedieneinrichtung kann z.B. als Bedientableau gestaltet sein. Sie wird erfindungsgemäß außerhalb des Gefahrenbereichs an der Holzbearbeitungsmaschine positioniert und ist hierzu mittels einer Trageinrichtung mit Abstand oberhalb eines Maschinentischs der Holzbearbeitungsmaschine angeordnet.

Die Halterung kann eine Fixierung, z.B. Klemm- oder Magnetfixierung, für die Befestigung des tragbaren Computers aufweisen. Eine Magnetfixierung hat Vorteile für die einfache, ergonomische und sichere Handhabung. Die beanspruchte Magnetfixierung ist günstig für eine automatische und selbsttätige Ausrichtung und Positionierung des tragbaren Computers an der Halterung. Die Magnetfixierung hält den tragbaren Computer in der vorgesehenen Position sicher fest. Dies hat auch Vorteile für Eingaben am tragbaren Computer, insbesondere an dessen Tastatur oder Touchscreen. Der tragbare Computer bleibt auch bei Wischbewegungen in Position und kann zielgenau bedient werden.

Eine Ausbildung der Paarung von halterungsseitigen und computerseitigen Magnetelementen als Permanentmagnete mit einander anziehender magnetischer Polung unterstützt die selbsttätige Ausrichtung und Positionierung besonders gut. Ein bevorzugt computerseitiger Magnethalter mit den verteilten Magnetelementen ermöglicht die einfache Ausrüstung oder Nachrüstung von tragbaren Computern. Hierbei kann es sich um kostengünstige tragbare Standard-Computer, z.B. Tablet-Computer, handeln.

Die Magnetfixierung hat auch Vorteile für die sichere drahtlose Kommunikation und den Signal- sowie Datenaustausch zwischen dem tragbaren Computer und der Kommunikationsschnittstelle an der Holzbearbeitungsmaschine, insbesondere an ihrer Steuerung. Die Magnetfixierung hat eine geringe Bauhöhe und erlaubt eine Positionierung des tragbaren Computers sehr nahe und ggf. mit Berührungskontakt an der Halterung. Dies hat verschiedene Vorteile.

Der Magnethalter kann für eine exakte Positionierung der computerseitigen Magnetelemente sorgen. Er kann z.B. plattenartig sowie steif oder flexibel ausgebildet sein. Der Magnethalter kann auch weitere einzelne oder kumulative Funktionen und Vorteile haben, z.B. für die Kühlung und/oder das induktive Laden des tragbaren Computers, für die Abschirmung der Magnetfelder der Magnetelemente, für eine Detektion der Anordnung des tragbaren Computers an der Halterung, für eine Entnahmesicherung bzw. Diebstahlsicherung oder dgl.. Der Magnethalter kann Vorrichtungen zum einfachen und sicheren Befestigen und Trennen am und vom tragbaren Computer aufweisen. Ferner können Mittel zum Trennen der aneinander haftenden Magnetelemente von Halterung und tragbarem Computer vorhanden sein.

Die beanspruchte Magnetfixierung hat eigenständige erfinderische Bedeutung. Sie kann an beliebigen Holzbearbeitungsmaschinen, dortigen Halterungen und tragbaren Computern angeordnet oder für eine Anordnung vorgesehen sein. Derartige Holzbearbeitungsmaschinen müssen nicht zwingend eine maschinenfeste Bedieneinrichtung und auch nicht eine solche Bedieneinrichtung mit einer exklusiven Auslösefunktion haben. Die Magnetfixierung ist auch für tragbare Computer geeignet, die einen erweiterten Funktionsumfang incl. einer Auslösefunktion haben.

Ferner kann eine Entnahmesicherung, z.B. eine Diebstahlsicherung, für den tragbaren Computer an der Halterung vorhanden sein. Die Halterung kann auch eine Energie-Ladeeinrichtung für den tragbaren Computer aufweisen. Dies kann z.B. eine drahtlose und elektrische Induktions-Ladeeinrichtung sein. Alternativ kann eine Kabelverbindung vorhanden sein. Günstig ist außerdem die Anordnung einer Kühleinrichtung für den tragbaren Computer an der Halterung. Die beanspruchte Magnetfixierung ist für eine definierte und enge Anlage des tragbaren Computers an der Halterung und für ein induktives Laden sowie eine Kühlung mit hoher Effizienz besonders vorteilhaft.

Aus Sicherheitsgründen ist es vorteilhaft, wenn die Holzbearbeitungsmaschine, insbesondere die Bedieneinrichtung bzw. die Halterung, eine Detektionseinrichtung für die zulässige und beschränkte Entfernung des tragbaren Computers von der Holzbearbeitungsmaschine aufweist. Hierüber kann z.B. sichergestellt werden, dass die Auslösung von sicherheitskritischen Maschinenfunktionen über die besagten Bedienmittel nur vorgenommen werden kann, wenn sich auch der tragbare Computer in der Nähe der betreffenden Holzbearbeitungsmaschine, insbesondere an der Halterung, befindet. Maschinenseitige Auslösung und computerseitige Einstellung können korreliert werden. Ein versehentliches und fehlerhaftes Auslösen kann verhindert werden.

Die beanspruchte Magnetfixierung sowie die hierdurch bewirkbare definierte und enge Anlage des tragbaren Computers an der Halterung können auch für die Detektionseinrichtung von Vorteil sein. Die Detektionseinrichtung kann z.B. einen berührungslosen, insbesondere induktiven oder kapazitiven Näherungsschalter, oder auch einen kontaktierenden Näherungsschalter aufweisen, der an geeigneter Stelle der Halterung angeordnet ist und auf den nahen tragbaren Computer anspricht. Ferner kann auch die Magnetfixierung als Detektionseinrichtung oder für diese benutzt werden, z.B. durch Erfassung der veränderten magnetischen Eigenschaften bei Kontakt der Magnetelemente.

Die miteinander kommunizierenden maschinenseitigen und computerseitigen Softwareprogrammprodukte können weitere ergonomische und sicherheitstechnische Funktionen haben. Eine Autorisierungs-Software kann den Bedienerzugang zur Holzbearbeitungsmaschine und/oder zum tragbaren Computer auf autorisierte Personen mittels einer Kennungseingabe oder dgl. beschränken. Eine Identifikations-Software kann dafür sorgen, dass die Holzbearbeitungsmaschine und ein oder mehrere bestimmte tragbare Computer einander zugeordnet sind. Versehentliche Fehleingaben und Fehleinstellungen über nicht zugeordnete andere tragbare Computer können verhindert werden.

In den Unteransprüchen sind weitere vorteilhafte Ausgestaltungen der Erfindung angegeben.

Das beanspruchte Holzbearbeitungssystem und das Verfahren können ferner folgende weiteren vorteilhaften Ausgestaltungen haben. Diese können einzeln oder in beliebiger Kombination untereinander und mit den beanspruchten Ausführungen benutzt werden.

Die maschinenfeste Bedieneinrichtung der Holzbearbeitungsmaschine kann eine Anzeige aufweisen.

Die maschinenfeste Bedieneinrichtung der Holzbearbeitungsmaschine kann als Bedientableau ausgebildet sein. Sie kann z.B. mittels einer Trageinrichtung mit Abstand oberhalb eines Maschinentischs der Holzbearbeitungsmaschine angeordnet sein.

Bei der Magnetfixierung können die Magnetelemente an der Halterung und die Magnetelemente am tragbaren Computer als Permanentmagnete ausgebildet sein, die in der Paarung eine einander anziehende magnetische Polung aufweisen.

Die Magnetfixierung kann einen am tragbaren Computer befestigbaren, insbesondere selbstklebenden, Magnetträger mit den Magnetelementen aufweisen.

Die Magnetelemente an der Halterung und die Magnetelemente am tragbaren Computer können eine gleiche Größe und/oder Form aufweisen.

Die Zentralpunkte der Magnetelemente an der Halterung und der Magnetelemente am tragbaren Computer können mit der gleichen flächigen Verteilung angeordnet sein. Die Magnetelemente können z.B. kreisrund ausgebildet sein.

Die einen Magnetelemente an der Halterung und die anderen Magnetelemente am tragbaren Computer können in ihrer jeweiligen Verteilung punktweise angeordnet sein und einen signifikanten Abstand voneinander haben.

Die maschinenseitige Kommunikationsschnittstelle kann auf einer Platine der Maschinensteuerung der Holzbearbeitungsmaschine angeordnet sein.

Das computerseitige Softwareprogrammprodukt kann Anweisungen enthalten, die dazu ausgebildet sind, bei Ausführung auf dem tragbaren Computer auf dessen Bildschirm, insbesondere Touchscreen, Bilder und/oder Symbole des Bearbeitungswerkzeugs und/oder der ggf. ein oder mehreren Nebenaggregate sowie ggf. Bedienelemente hierfür darzustellen und Einstellbefehle einzugeben.

Der tragbare Computer kann einen Bildschirm, insbesondere einen Touchscreen, einen Datenspeicher mit dem computerseitigen Softwareprogrammprodukt und eine Kommunikationsschnittstelle aufweisen.

Der tragbare Computer kann als dedizierter Computer oder als Consumer-Computer ausgebildet sein.

Die eigenständig erfinderische Magnetfixierung kann für die lösbare Befestigung eines tragbaren Computers an einer Halterung einer Holzbearbeitungsmaschine vorgesehen und ausgebildet sein, wobei die Magnetfixierung jeweils mehrere Magnetelemente an der Halterung und mehrere Magnetelemente am tragbaren Computer aufweist, die zum Fixieren mit Magnetkraft zusammenwirken.

Die Magnetelemente der Magnetfixierung können mit einer gleichartigen und linearen oder flächigen Verteilung an der Halterung und am tragbaren Computer angeordnet sein.

Die Magnetelemente der Magnetfixierung an der Halterung und die Magnetelemente am tragbaren Computer können jeweils als Permanentmagnete ausgebildet sein, die in der Paarung eine einander anziehende magnetische Polung aufweisen.

Die Magnetfixierung kann einen am tragbaren Computer befestigbaren, insbesondere selbstklebenden, Magnetträger mit den Magnetelementen aufweisen.

Die Magnetelemente an der Halterung und die Magnetelemente am tragbaren Computer können eine gleiche Größe und/oder Form aufweisen.

Die Zentralpunkte der Magnetelemente an der Halterung und der Magnetelemente am tragbaren Computer können mit der gleichen flächigen Verteilung angeordnet sein. Die Magnetelemente können z.B. kreisrund ausgebildet sein.

Die einen Magnetelemente an der Halterung und die anderen Magnetelemente am tragbaren Computer können in ihrer jeweiligen Verteilung punktweise angeordnet sein und einen signifikanten Abstand voneinander haben.

Die Erfindung betrifft auch generell eine Holzbearbeitungsmaschine mit einem angetriebenen und ggf. verstellbaren Bearbeitungswerkzeug, ggf. ein oder mehreren Nebenaggregaten und einer Maschinensteuerung, wobei die Holzbearbeitungsmaschine eine Halterung mit einer Fixierung für einen tragbaren Computer aufweist, wobei die Fixierung als Magnetfixierung ausgebildet ist. Diese Magnetfixierung kann die vorgenannte Ausbildung der eigenständig erfinderischen Magnetfixierung haben.

Die Erfindung ist in den Zeichnungen beispielhaft und schematisch dargestellt. Im Einzelnen zeigen:
- Figur 1:: eine perspektivische Ansicht eines Holzbearbeitungssystems mit einer Holzbearbeitungsmaschine, einer maschinenfesten Bedieneinrichtung und einem tragbaren Computer,
- Figur 2:: eine Frontansicht des Holzbearbeitungssystems von Figur 1 in y-Richtung,
- Figur 3:: eine Stirnansicht des Holzbearbeitungssystems von Figur 1 in x-Richtung,
- Figur 4:: eine Schemadarstellung eines tragbaren Computers,
- Figur 5:: eine Draufsicht des Holzbearbeitungssystems von Figur 1 in z-Richtung,
- Figur 6:: eine perspektivische Ansicht einer Bedieneinrichtung mit einer Halterung und einem tragbaren Computer,
- Figur 7:: eine Explosionsansicht der Anordnung von Figur 5 mit einer Magnetfixierung,
- Figur 8:: eine Draufsicht der Bedieneinrichtung von Figur 6 und 7 und
- Figur 9:: eine perspektivische und aufgebrochene Rückansicht der Bedieneinrichtung von Figur 6, 7 und 8.

Die Erfindung betrifft ein Holzbearbeitungssystem (1) und ein Bearbeitungsverfahren. Das Holzbearbeitungssystem (1) umfasst zumindest eine Holzbearbeitungsmaschine (2). Es kann ferner ein auf einem tragbaren Computer (14) gespeichertes und ausgeführtes computerseitiges Softwareprogrammprodukt (18) umfassen. Das Holzbearbeitungssystem (1) kann außerdem den tragbaren Computer (14) beinhalten. Die Erfindung betrifft ferner ein computerseitiges Softwareprogrammprodukt (18).

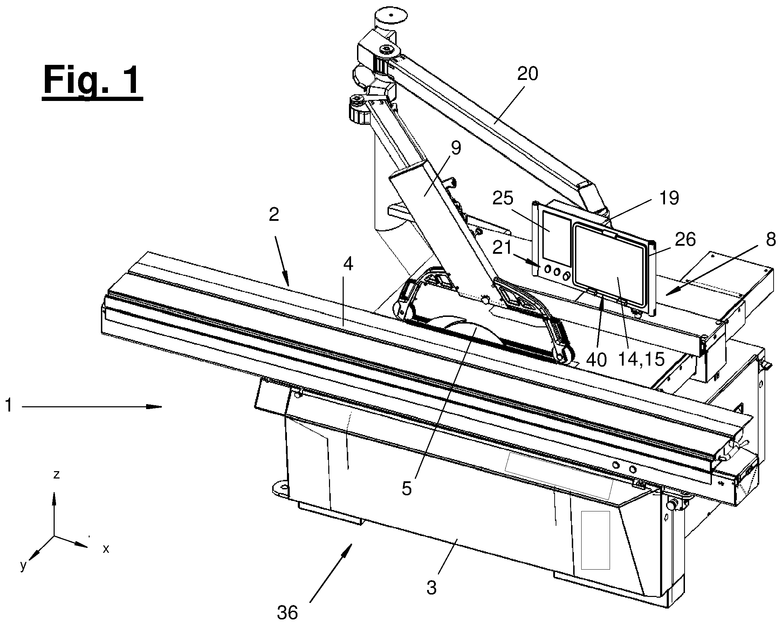

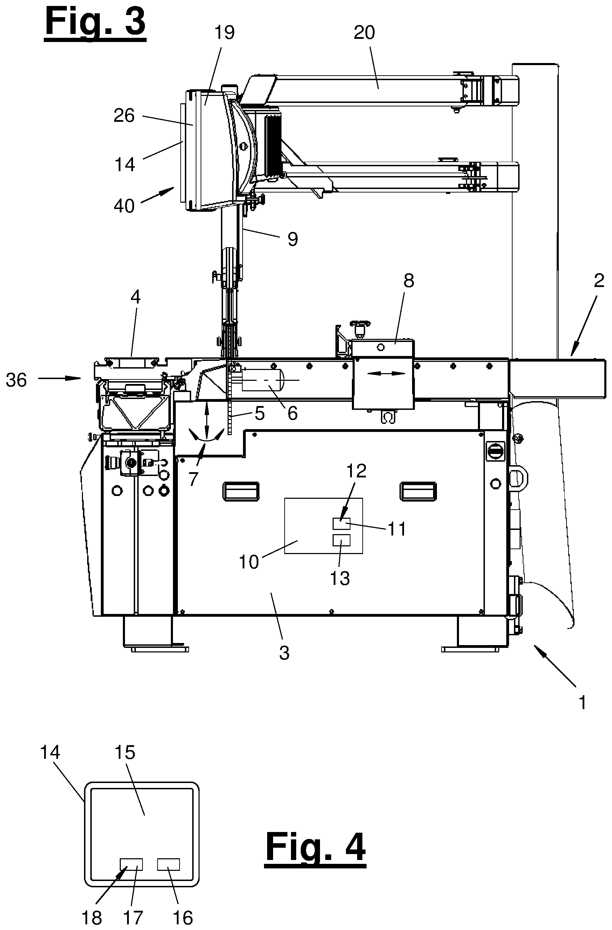

Figur 1 bis 3 zeigen eine Holzbearbeitungsmaschine (2). Diese dient zur bevorzugt spanabhebenden Bearbeitung eines nicht dargestellten Holzprodukts. Sie weist ein Maschinengestell (3) mit einem Maschinentisch (4) an der Oberseite sowie ein Bearbeitungswerkzeug (5) mit einem z.B. rotierend treibenden Antrieb (6) und ggf. einer Stelleinrichtung (7) auf. Ferner umfasst die Holzbearbeitungsmaschine (2) z.B. ein oder mehrere Nebenaggregate (8). Die Holzbearbeitungsmaschine (2) weist eine in Figur 3 schematisch dargestellte Maschinensteuerung (10) auf.

Im gezeigten Ausführungsbeispiel ist die Holzbearbeitungsmaschine als Tischkreissäge ausgebildet. Das Bearbeitungswerkzeug (5) weist z.B. ein rotierend angetriebenes Kreissägeblatt auf. Zusätzlich kann ein rotierend angetriebener Vorritzer vorhanden sein. Mit der in Figur 3 schematisch angedeuteten Stelleinrichtung (7) kann das Bearbeitungswerkzeug (5), z.B. das Kreissägeblatt und der evtl. Vorritzer, in der Höhe und ggf. in der Neigung um die x-Achse relativ zum Maschinentisch (4) verstellt werden. Die angetriebene und fernsteuerbare Stelleinrichtung (7) kann z.B. ein Nebenaggregat darstellen.

Ein anderes Nebenaggregat (8) kann z.B. ein in Figur 3 angedeuteter verstellbarer Anschlag sein. Die Holzbearbeitungsmaschine (2) kann ferner eine Absaugeinrichtung (9) für den Sägestaub umfassen, die ebenfalls ein Nebenaggregat darstellen kann. Die Absaugeinrichtung (9) beinhaltet z.B. eine über dem aus dem Maschinentisch (4) herausragenden Teil des Bearbeitungswerkzeugs (5) platzierbare und verstellbare Schutzhaube.

Bei einer als Fräse ausgebildeten Holzbearbeitungsmaschine könnte ein Nebenaggregat z.B. von einer verstellbaren Tischeinlage und/oder einem Vorschubsupport gebildet werden. Bei einer Hobelmaschine könnte eine Verstelleinrichtung für die Tischhöhe ein Nebenaggregat bilden. Bei einer Schleifmaschine könnten Führungs- und Andruckmittel ein Nebenaggregat ein. Die besagten Nebenaggregate beinhalten ebenfalls angetriebene Maschinenachsen.

Die Holzbearbeitungsmaschine (2) kann in einer anderen Ausführungsform, z.B. als Bandsäge, als Hobelmaschine, als Fräsmaschine, als Schleifmaschine oder dgl. ausgestaltet sein. Das Bearbeitungswerkzeug (5), die evtl. Nebenaggregate (8) und das Maschinengestell (3) sowie andere Maschinenkomponenten ändern sich dabei entsprechend.

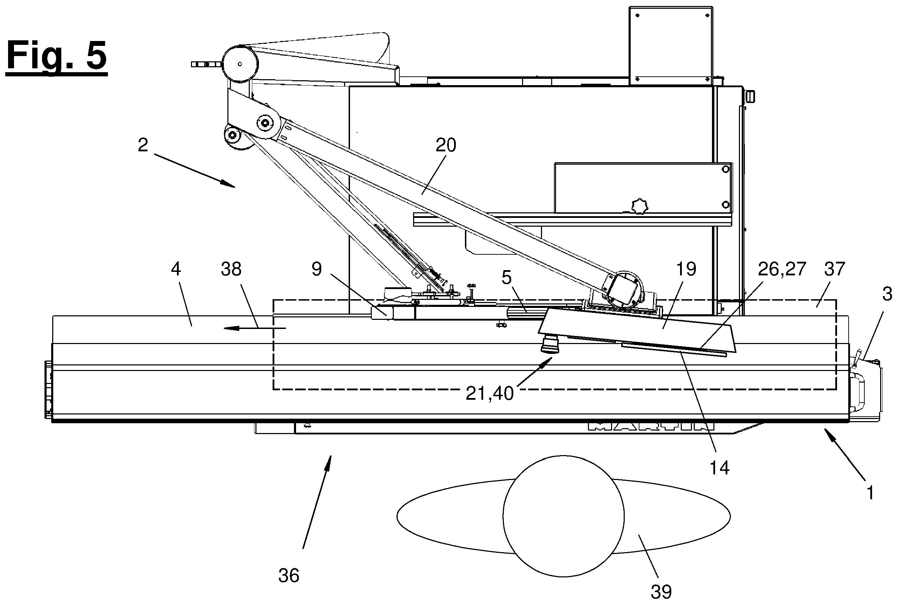

Die Holzbearbeitungsmaschine (2) ist in der gezeigten Ausführungsform als offene und frei zugängliche Maschine ausgebildet. Sie wird manuell bedient und weist eine Bedienseite (36) auf, an der ein Bediener (39) steht und die Bedienung vornimmt. Figur 5 verdeutlicht diese Ausbildung.

Der Bediener (39) führt z.B. ein Werkstück (37) zu, beispielsweise ein Holzbrett. Er kann auch den Vorschub des Werkstücks (37) relativ zum bevorzugt stationären Bearbeitungswerkzeug (5) bewirken. Das Werkstück (37) wird z.B. auf einem Schlitten des Maschinentischs (4) aufgelegt und in Vorschubrichtung (38) am Bearbeitungswerkzeug (5) vorbeibewegt. Die Kinematik kann auch umgekehrt sein, wobei der Bediener (39) ein instationäres Bearbeitungswerkzeug (5) relativ zu einem fixierten Werkstück (37) bewegt. In einer anderen Variante können die Zuführung und der Vorschub des Werkstücks (37) teilweise oder vollständig automatisiert sein, wobei der an der Holzbearbeitungsmaschine (2) stehende Bediener (39) ggf. eine Überwachungsfunktion hat und bedarfsweise eingreifen kann.

Die Holzbearbeitungsmaschine (2) weist in den verschiedenen Ausführungsformen eine maschinenfest angeordnete Bedieneinrichtung (19) mit einer Bedienmittelgruppe (21) auf. Die maschinenfeste Bedieneinrichtung (19) ist z.B. als Bedientableau oder Bedienpult ausgebildet und weist ein Gehäuse mit einer zum Bediener (39) gerichteten Bedienfront (40) auf, an der die Bedienmittelgruppe (21) angeordnet ist. Figuren 1 bis 3 und Figuren 5 bis 9 zeigen verschiedene Varianten der Bedieneinrichtung (19).

Die Bedieneinrichtung (19) ist fest mit der Holzbearbeitungsmaschine (2) verbunden. Sie kann dabei starr oder beweglich an der Holzbearbeitungsmaschine (2) angeordnet sein. In den gezeigten Ausführungsformen ist die Bedieneinrichtung (19) an einer vorzugsweise ein- oder mehrachsig verstellbaren Trageinrichtung (20) angeordnet, die am Maschinengestell (3) der Holzbearbeitungsmaschine (2) angeordnet ist. Die Holzbearbeitungsmaschine (2) hat einen Arbeits- und Gefahrenbereich an den ein oder mehreren angetriebenen und ggf. verstellbaren Bearbeitungswerkzeug(en) (5) und ggf. an den ein oder mehreren Nebenaggregaten (8) sowie am ggf. vorhandenen Maschinentisch (4). Die Bedieneinrichtung (19) ist für die Bedienung durch den direkt an der Holzbearbeitungsmaschine (2) stehenden Bediener (39) und für dessen Sichtkontrolle in der Nähe des Arbeits- und Gefahrenbereichs angeordnet. Sie befindet sich z.B. mit Abstand oberhalb des Maschinentischs (4). Sie liegt dabei außerhalb des Arbeits- und Gefahrenbereichs der Holzbearbeitungsmaschine (2).

Die Bedienmittelgruppe (21) weist mehrere Bedienmittel (22,23,24) mit einer Auslösefunktion auf. Vorzugsweise sind nur Bedienmittel mit einer ausschließlichen Auslösefunktion vorhanden. Die Bedienmittel (22,23,24) sind für eine kontaktierende manuelle Bedienung vor Ort an der Holzbearbeitungsmaschine (2) ausgebildet. Sie sind z.B. als kontaktierend zu betätigende Schalter, Tastersteller oder dergleichen ausgebildet. Die Bedienmittel (22),23,24) können jeweils einteilig oder mehrteilig ausgebildet sein.

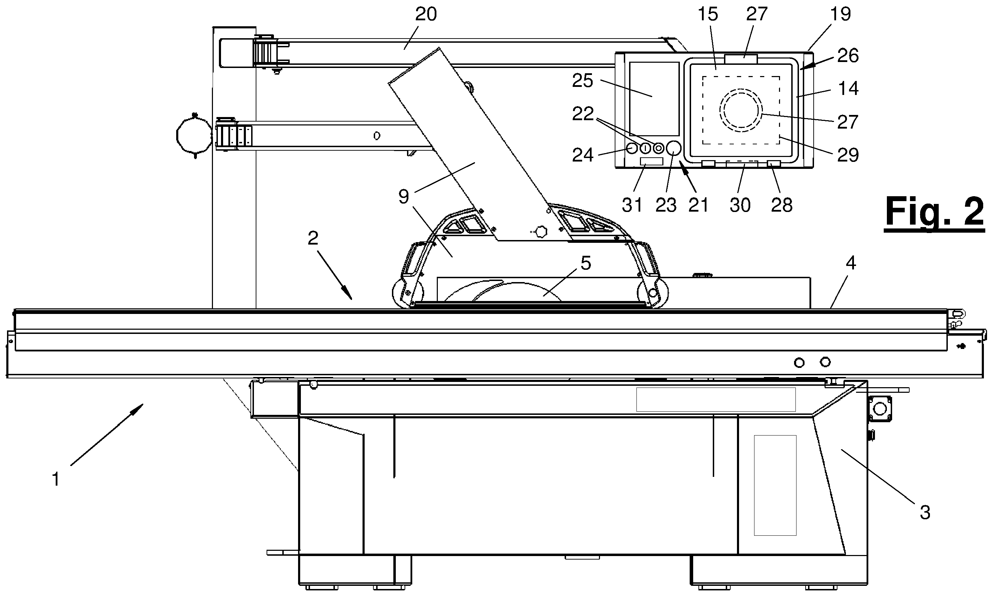

In den gezeigten Ausführungsformen ist ein Bedienmittel (22) zum Starten und Stoppen des Bearbeitungswerkzeugs (5) ausgebildet. Dieses Bedienmittel (22) kann mehrteilig oder als einteiliges Kombimittel ausgebildet sein. Es kann z.B. gemäß Figur 2 mehrteilig sein und zwei getrennte, einfunktionale Taster, Schalter oder dgl. zum Starten einerseits und zum Stoppen andererseits aufweisen. In Figur 1 ist eine einteilige Variante in Form eines Ein/Ausschalters dargestellt, der Wechselfunktion hat und z.B. bei erster Betätigung startet bzw. einschaltet und bei nächster Betätigung ausschaltet.

Ein anderes Bedienmittel (23) ist für einen Not-Halt ausgebildet. Es ist z.B. als einzelner Drucktaster ausgestaltet. Ein bevorzugt angeordnetes drittes Bedienmittel (24) ist zur Funktionsauslösung eines Nebenaggregats (8) ausgebildet. Dieses Bedienmittel kann einteilig und z.B. als Ein/Ausschalter ausgebildet sein. Es kann auch entfallen, falls keine sicherheitskritischen Nebenaggregate vorhanden sind.

Die maschinenfeste Bedieneinrichtung (19), insbesondere das Bedientableau, weist ferner eine Anzeige (25) auf. Diese ist z.B. als Bildschirm ausgebildet. Die Bedienmittel (22,23,24) können zusammen in einem Block an einem Randbereich der Bedieneinrichtung (19) angeordnet sein. Daneben befindet sich an der Bedieneinrichtung (19) ein nachfolgend erläuteter Halter (26) für den tragbaren Computer (14). Diese Komponenten können alle an der Bedienfront (40) angeordnet sein.

Die Holzbearbeitungsmaschine (2) weist eine Kommunikationsschnittstelle (13) für eine drahtlose Kommunikation mit dem tragbaren Computer (14) auf. Die maschinenseitige Kommunikationsschnittstelle (13) ist bevorzugt an der Maschinensteuerung (10), insbesondere auf einer Platine der Maschinensteuerung (10), fest oder lösbar, z.B. austauschbar, angeordnet.

Der tragbare Computer (14) kann z.B. als Tabletcomputer oder in anderer Weise ausgebildet sein. Der tragbare Computer (14) weist ebenfalls eine integrierte Kommunikationsschnittstelle (16) auf, die zur drahtlosen Kommunikation mit der maschinenseitigen Kommunikationsschnittstelle (13) dient.

Die Kommunikationsschnittstellen (13,16) weisen jeweils einen Sender und einen Empfänger und ein gemeinsames Kommunikationsprotokoll auf. Die Kommunikationsschnittstellen (13,16) können z.B. per Funk, WLAN, Bluetooth, Infrarot oder auf andere Weise drahtlos miteinander kommunizieren. Eine Antenne, ein Infarotauge oder dgl. kann an geeigneter Stelle, z.B. am Maschinengestell (3), angeordnet sein.

Der in Figur 4 schematisch dargestellte tragbare Computer (14) weist frontseitig einen Bildschirm (15) auf, der z.B. als Touchscreen oder in anderer Weise ausgebildet ist. Die Bedienelemente können im Touchscreen vollständig oder teilweise integriert sein. Der Bildschirm (15) hat vorzugsweise eine diagonale Größe von 10" oder mehr, insbesondere 13" oder mehr. Der tragbare Computer (14) umfasst ferner einen Datenspeicher (17), auf dem ein Softwareprogrammprodukt (18) gespeichert ist.

Das computerseitige Softwareprogrammprodukt (18) dient zur Fernbedienung der Holzbearbeitungsmaschine (2). Das Softwareprogrammprodukt (18) enthält Anweisungen, die dazu ausgebildet sind, bei Ausführung auf dem tragbaren Computer (14) mittels der drahtlosen Kommunikation die Ausführung eines Steuerverfahrens an der Holzbearbeitungsmaschine (2) zu veranlassen. Das Softwareprogrammprodukt (18) kann z.B. Softwarekomponenten für eine Einstellung des einteiligen oder mehrteiligen Bearbeitungswerkzeugs (5), der evtl. ein oder mehreren Nebenaggregate (8) und evtl. weiterer Komponenten der Holzbearbeitungsmaschine (2) umfassen. Das Softwareprogrammprodukt (18) beinhaltet außerdem eine Visualisierungssoftware, welche am Bildschirm (15) Eingabefelder für die besagten Einstellungen, Symbolfelder für die Visualisierung der besagten Maschinenkomponenten, Quittungssignale und Statusanzeigen enthält. Eine andere Softwarekomponente könnte ein Ablaufprogramm sein, eine Schnittfolgeanweisung oder dgl.. Die Eingaben können am tragbaren Computer (14) über den bevorzugten Touchscreen oder auf andere Weise, z.B. über eine Tastatur, eine Maus oder dgl. leitungsgebunden oder drahtlos eingegeben werden.

Die Holzbearbeitungsmaschine (2) weist ebenfalls einen Datenspeicher (11) mit einem hier gespeicherten Softwareprogrammprodukt (12) auf. Der Datenspeicher (11) ist bevorzugt an der Maschinensteuerung (10), insbesondere auf deren Platine, angeordnet.

Das maschinenseitige Softwareprogrammprodukt (12) wirkt mit dem computerseitigen Softwareprogrammprodukt (18) zusammen. Das maschinenseitige Softwareprogrammprodukt (12) enthält Anweisungen, die dazu ausgebildet sind, mittels der drahtlosen Kommunikation mit dem tragbaren Computer (14) auf der Maschinensteuerung (10) ein Steuerverfahren für die Holzbearbeitungsmaschine (2) auszuführen. Bei diesem Steuerverfahren können Einstellungen am Bearbeitungswerkzeug (5) und/oder an einem oder mehreren Nebenaggregaten (8) vorgenommen werden. Andererseits können bei dem Steuerverfahren mittels einer geeigneten Sensorik an der Holzbearbeitungsmaschine (2) Zustandsinformationen von Maschinenkomponenten, insbesondere dem Bearbeitungswerkzeug (5), dem Antrieb (6), der Stelleinrichtung (7), ein oder mehreren Nebenaggregaten (8) oder dgl. aufgenommen werden. Diese Zustandsinformationen können vom maschinenseitigen Softwareprogrammprodukt über die drahtlose Kommunikation an den tragbaren Computer (14) gemeldet und an dessen Bildschirm (15) zur Anzeige gebracht werden.

Die Holzbearbeitungsmaschine (2) weist eine vorerwähnte Halterung (26) für den tragbaren Computer (14) auf. Die Halterung (26) ist vorzugsweise an der Bedieneinrichtung (19) angeordnet. Sie befindet sich neben der Anzeige (25) und der Bedienmittelgruppe (21).

Die Halterung (26) ist zur lösbaren Aufnahme des tragbaren Computers (14) ausgebildet. Sie weist hierfür z.B. eine bevorzugt vertiefte, schalenartige Aufnahme auf. Die Halterung (26) und deren Aufnahme können für unterschiedliche Computerformate tauglich sein.

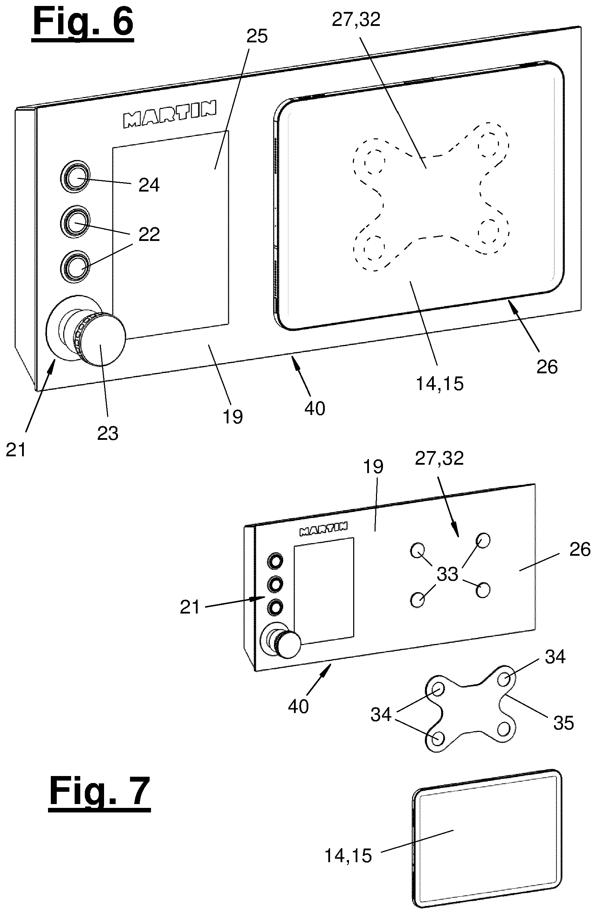

Die Halterung (26) weist eine Fixierung (27) für den tragbaren Computer (14) auf. Die Fixierung (27) kann z.B. als Halteschiene und als Federklammer für die formschlüssige und mechanische sowie lösbare Befestigung des tragbaren Computers (14) ausgebildet sein. Alternativ oder zusätzlich kann eine Fixierung (27) als Magnetfixierung (32) ausgebildet sein, die den tragbaren Computer (14) an seiner Rückseite mit Magnetkraft an der Halterung (26) festhält. In Figur 2 sind beide Varianten angedeutet. Figur 6 bis 9 zeigen eine bevorzugte Ausführungsform einer Magnetfixierung (32).

Die Fixierung (27) kann für unterschiedliche Computerformate variabel sein. Eine Magnetfixierung (32) hat besondere variable Eigenschaften. Sie ist auch vorteilhaft für eine selbsttätige Ausrichtung und Positionierung des tragbaren Computers (14) an der Halterung (26).

Die Halterung (26) kann ferner eine Entnahmesicherung (28) für den tragbaren Computer (14) aufweisen. Die Entnahmesicherung kann z.B. als Diebstahlsicherung ausgebildet sein. Sie kann mit der Fixierung (27), insbesondere mit einer mechanischen Fixierung (27), gekoppelt und z.B. schlossartig ausgestaltet sein.

Die Halterung (26) kann eine Energie-Ladeeinrichtung (29) für den tragbaren Computer (14) aufweisen. Dies kann z.B. eine elektrische und induktive Ladeeinrichtung sein. An der Computerrückseite ist hierfür eine Ladeantenne eingebaut, die mit einer entsprechenden Antenne an der Ladeeinrichtung (29) induktiv zusammenwirkt. Alternativ kann die Ladeeinrichtung (29) leitungsgebunden sein und ein Ladekabel zum Einstecken am tragbaren Computer (14) aufweisen. In der gezeigten Ausführungsform wird elektrische Energie übertragen. Alternativ ist bei einer entsprechenden Computergestaltung auch die Übertragung einer anderen Energie möglich.

Die Halterung (26) weist ferner eine Kühleinrichtung (30) für den tragbaren Computer (14) auf. Diese kann konduktiv oder konvektiv wirken. Die Kühleinrichtung (30) kann z.B. ein Gebläse aufweisen, das einen kühlenden Luftstrom auf die Außenhaut, insbesondere die Rückseite, des tragbaren Computers (14) richtet und die entstehende Prozessorwärme konvektiv abführt. Alternativ oder zusätzlich kann die Kühleinrichtung (30) eine Kühlplatte für eine konduktive Kühlung aufweisen, die z.B. mit einem Peltier-Element gekühlt wird.

Die Holzbearbeitungsmaschine (2), z.B. die Bedieneinrichtung (19), insbesondere die Halterung (26), weist ferner eine Detektionseinrichtung (31) für die Erfassung des Abstands und der zulässigen Entfernung des tragbaren Computers (14) von der Holzbearbeitungsmaschine (2) auf. Die zulässige Entfernung kann einen definierten Umkreis von z.B. 3 Meter um die Holzbearbeitungsmaschine (2) betreffen. Der Abstand kann auch ein anderes Maß haben. Er kann ferner richtungsgebunden sein. Wenn sich der tragbare Computer (14) innerhalb der zulässigen Entfernung befindet, kann die Bedienmittelgruppe (21) freigeschaltet und vom Bediener betätigt werden. Befindet sich der tragbare Computer (14) außerhalb der zulässigen Entfernung, kann die Bedienmittelgruppe (21) gesperrt werden.

Figur 6 bis 9 zeigen eine bevorzugte Ausführungsform der vorgenannten Fixierung (32) in Form einer Magnetfixierung (32). Figur 6 zeigt hierzu in perspektivischer Ansicht eine Bedieneinrichtung (19) mit einer Bedienmittelgruppe (21) und einer Anzeige (25) sowie einer Halterung (26) für einen tragbaren Computer (14). Der Computer (14) ist z.B. als Tabletcomputer ausgebildet und weist einen großen frontseitigen Bildschirm (15) auf.

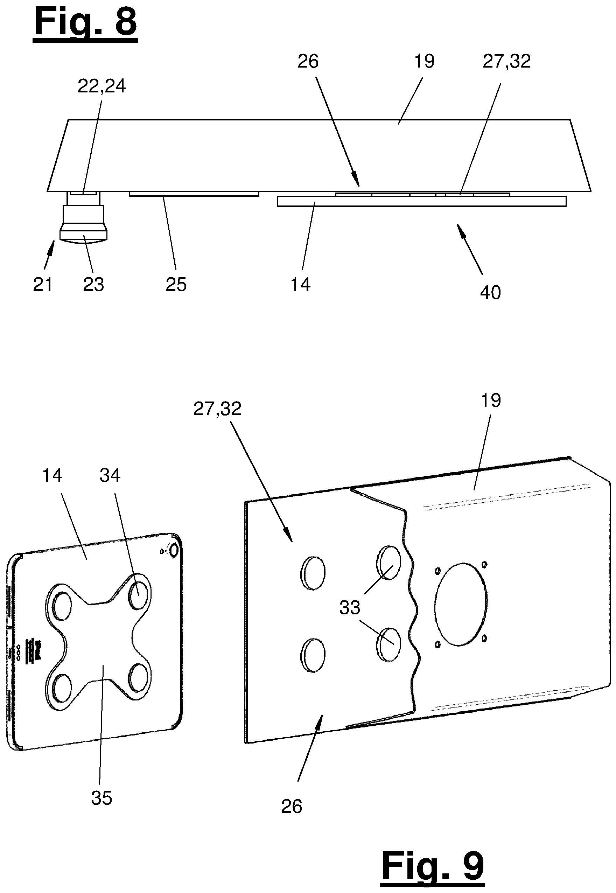

Die Magnetfixierung (32) ist zwischen der Halterung (26) an der Bedieneinrichtung (19) und der Rückseite des tragbaren Computers (14) angeordnet. In Figur 7 ist hierzu eine Explosionsdarstellung der Teile dargestellt. In Figur 8 ist eine Draufsicht und in Figur 9 eine perspektivische und zum Teil aufgebrochene Rückansicht der Bedieneinrichtung (19) und des tragbaren Computers (14) dargestellt.

Die Magnetfixierung (32) beinhaltet mehrere Magnetelemente (33), die an der Frontseite der Halterung (26) und des Bedientableaus (19) angeordnet sind. Die Magnetelemente (33) sind bevorzugt mit einer vorgegebenen flächigen Verteilung an der Halterung (26) angeordnet. In der gezeigten Ausführungsform sind vier Magnetelemente (33) vorhanden. Deren Zahl kann auch kleiner oder größer sein. Die besagte flächige Verteilung meint im Gegensatz zu einer Reihenanordnung, dass die Magnetelemente (33) nicht auf einer gemeinsamen und geraden Linie hintereinander angeordnet sind. In der gezeigten Ausführungsform sind die Magnetelemente (33) in einem Viereck verteilt angeordnet, bei dem die Magnetelemente (33) die Ecken bilden.

Die Magnetfixierung (32) umfasst ferner mehrere Magnetelemente (34), die dem tragbaren Computer (14) zuordenbar oder zugeordnet sind. Die computerseitigen Magnetelemente (34) sind in gleicher Zahl und in gleichartiger Anordnung wie die Magnetelemente (33) an der Halterung (26) positioniert. Die Magnetelemente (33,34) können eine gleiche oder auch eine unterschiedliche Größe und/oder Form aufweisen. In der bevorzugten Ausführungsform sind die Zentralpunkte der z.B. kreisrunden Magnetelemente (33,34) mit der gleichen flächigen Verteilung angeordnet. Die einen Magnetelemente (33) und die anderen Magnetelemente (34) sind in ihrer jeweiligen Verteilung punktweise angeordnet und haben einen signifikanten Abstand voneinander.

Die zusammenwirkenden Magnetelemente (33,34) an der Halterung (26) und am tragbaren Computer (14) können in beliebig geeigneter Weise ausgebildet sein. Die einen, z.B. halterungsseitigen Magnetelemente (33) können als Permanentmagnete und die anderen Magnetelemente (34) als ferromagnetische Gegenkörper ausgebildet sein. Die Anordnung kann auch umgekehrt sein.

In einer bevorzugten Ausführung sind die halterungsseitigen und die computerseitigen Magnetelemente (33,34) jeweils als Permanentmagnete ausgebildet, die in der Paarung eine einander anziehende magnetische Polung aufweisen. Die einen Magnetelemente (33) weisen an der Kontaktfläche z.B. eine Nord-Polung und die anderen Magnetelemente (34) weisen eine Süd-Polung auf. Die entgegen gesetzt gepolten Permanentmagnete ziehen sich bei einer Annäherung des tragbaren Computers (14) an die Halterung (26) besonders stark an.

Die computerseitigen Magnetelemente (34) können direkt an der Rückseite des tragbaren Computers (14) angeordnet sein. In der gezeigten und bevorzugten Ausführungsform sind die computerseitigen Magnetelemente (34) an einem Magnethalter (35) angeordnet. Der Magnethalter (35) ist zur dauerhaften oder ggf. lösbaren Befestigung an der Rückseite des tragbaren Computers (14) vorgesehen und ausgebildet.

Der Magnetträger (35) kann z.B. als biegeelastische Folie mit montierten Magnetelementen (34) ausgestaltet sein. Die Verbindung zwischen dem Magnetträger (35) und dem tragbaren Computer (14) kann eine Klebeverbindung, insbesondere eine selbstklebende Verbindung sein.

In einer anderen Ausführung kann der Magnetträger (35) plattenartig ausgebildet sein und eine Eigensteifigkeit aufweisen. Die Magnetelemente (34) können am Magnetträger (35) eingebettet sein.

An der Fixierung (27), insbesondere am oder im Magnetträger (35), können sich eine oder mehrere weitere Komponenten befinden. Diese können einzeln oder in beliebiger Kombination vorhanden sein. Dies kann z.B. eine Induktionsspule zum kabellosen Aufladen der Batterie des tragbaren Computers (14) sein, die ggf. auch für eine Datenübertragung und/oder eine drahtlose Kommunikation genutzt werden kann. Eine Komponente kann ein Kühlelement, z.B. ein elektrisches Peltier-Element oder ein kälteleitendes Element zur thermisch leitenden Verbindung zwischen einem halterungsseitigen Kühlelement und der Computerwand sein. Eine andere Komponente kann eine Sensorik sein, z.B. eine Näherungssensorik und/oder eine Kontaktsensorik, die das besagte Fixieren oder auch ein Entfernen des tragbaren Computers (14) detektiert. Eine weitere Komponente kann ein Sicherungselement sein, welches eine unbeabsichtigte oder unbefugte Abnahme des tragbaren Computers (14) von der Halterung (26) detektiert, z.B. für eine Diebstahlsicherung. Am Magnetträger (35) kann sich für die Energieversorgung, insbesondere Stromversorgung, von dort integrierte(n) Komponente(n) ein elektrisches Kontaktelement befinden, das mit einem unter elektrischer Spannung stehenden GegenKontaktelement an der Halterung (26) stromleitend zusammenwirkt, wenn der tragbare Computer (14) an der Halterung (26) fixiert wird.

Eine oder mehrere andere Komponenten der Fixierung (27), insbesondere des Magnetträgers (35), können ein Abschirmmittel zur Abschirmung der magnetischen Felder der Magnetelemente (33,34), eine Vorrichtung zum Verbinden und/oder zum Trennen von Magnetträger (35) und tragbarem Computer (14) und/oder eine Vorrichtung zum einfachen Trennen bzw. Lösen der Magnetfixierung (32) sein.

Das maschinenseitige Softwareprogrammprodukt (12) weist eine Autorisierungs-Software auf. Diese kann **z.B.** mit dem tragbaren Computer (14) und dessen Softwareprogrammprodukt (18) zusammenwirken. Die Autorisierungs-Software erfordert die Eingabe eines personenspezifischen Codes, um ein Steuerprogramm an der Holzbearbeitungsmaschine (2) ausführen zu können. Ohne die erforderliche Codeeingabe bleiben die Bedienmittelgruppe (21) und ggf. die Softwareprogrammprodukte (12,18) gesperrt.

Die Softwareprogrammprodukte (12,18) können außerdem eine Identifikations-Software aufweisen. Hierdurch kann eine Zuordnung zwischen der Holzbearbeitungsmaschine (2) und einem von mehreren tragbaren Computern (14) getroffen werden. Eingaben für die Holzbearbeitungsmaschine (2) werden nur vom zugeordneten tragbaren Computer (14) akzeptiert. Umgekehrt erfolgen Rückmeldungen nur an diesen zugeordneten tragbaren Computer (14). Eine Zuordnung kann zu mehreren bestimmten tragbaren Computern (14) bestehen.

Das computerseitige Softwareprogrammprodukt (18) kann weitere Softwarekomponenten beinhalten. Dies sind z.B. eine Schnittoptimierungs-Software und/oder eine Gestaltungs-Software für Holzprodukte und/oder eine Vertriebs-Software und/oder eine Planungs-Software. Diese Softwarekomponenten können Bestandteil des computerseitigen Softwareprogrammprodukts (18) sein. Sie können alternativ getrennt und unabhängig von dem computerseitigen Softwareprogrammprodukt (18) auf dem Datenspeicher (17) gespeichert sein.

Das computerseitige Softwareprogrammprodukt (18) kann eine Wartungs-Software für die Holzbearbeitungsmaschine (2) aufweisen. Diese kann mit einer am tragbaren Computer (14) angeordneten Erfassungseinrichtung, z.B. einer digitalen Kamera, zusammenwirken. Mit der Wartungs-Software können optisch erfasste Maschinenteile oder andere Gegenstände mittels einer Bildauswertung erkannt und in der eingangs genannten Weise ausgewertet werden.

Der tragbare Computer (14) ist in der gezeigten Ausführungsform als Consumer-Computer, insbesondere als handelsüblicher Tabletcomputer, ausgebildet. Das Softwareprogrammprodukt (18) kann in beliebig geeigneter Weise leitungsgebunden oder drahtlos aufgespielt und im Datenspeicher (17) gespeichert werden. Daneben können weitere Softwarekomponenten im Zusammenhang mit dem Einsatz der Holzbearbeitungsmaschine (2) oder zu anderen Zwecken aufgespielt werden. Dies können ein Browser für eine Kommunikation mit dem Internet, eine Kommunikationssoftware zur Versendung und zum Empfang von E-Mails oder anderen Nachrichten, eine Business-Software mit Textprogramm, Datenbank, Tabellenkalkulationssoftware, Präsentationssoftware, Projektsoftware oder dgl. sein.

Abwandlungen der gezeigten und beschriebenen Ausführungsform sind in verschiedener Weise möglich. Insbesondere können die Merkmale der Ausführungsform und der genannten Varianten im Rahmen der Ansprüche in beliebiger Weise miteinander kombiniert und gegebenenfalls auch vertauscht werden.

Abwandlungen betreffen z.B. den tragbaren Computer (14), der auch als Smartphone oder als dedizierter Computer mit besonderer Ausbildung und Eignung für die Holzbearbeitungsmaschine (2) ausgebildet sein kann. Die Halterung (26) kann an anderer Stelle der Holzbearbeitungsmaschine (2) angeordnet sein. Sie kann nur einen Teil der vorgenannten Bestandteile und Einrichtungen (27,28,29,30,31) enthalten. Die Detektionseinrichtung (31) kann an anderer Stelle der Holzbearbeitungsmaschine (2) angeordnet sein.

Bei der Magnetfixierung (32) können in der Verteilung jeweils zwei oder mehr Magnetelemente (33,34) linear hintereinander angeordnet sein. Ferner ist eine flächige Verteilung von jeweiligen Magnetelementen (33,34) in einer Matrix oder in einem Dreieck, Fünfeck oder sonstigen Mehreck möglich. Eine ringförmige Verteilung ist ebenfalls umfasst.

### BEZUGSZEICHENLISTE

- 1: Holzbearbeitungssystem
- 2: Holzbearbeitungsmaschine
- 3: Maschinengestell
- 4: Maschinentisch
- 5: Bearbeitungswerkzeug
- 6: Antrieb
- 7: Stelleinrichtung
- 8: Nebenaggregat
- 9: Absaugungeinrichtung
- 10: Maschinensteuerung
- 11: Datenspeicher
- 12: Softwareprogrammprodukt
- 13: Kommunikationsschnittstelle
- 14: tragbarer Computer, Tablet
- 15: Bildschirm
- 16: Kommunikationsschnittstelle
- 17: Datenspeicher
- 18: Softwareprogrammprodukt
- 19: Bedieneinrichtung, Bedientableau
- 20: Trageinrichtung
- 21: Bedienmittelgruppe
- 22: Bedienmittel, Start/Stop
- 23: Bedienmittel, Not-Halt
- 24: Bedienmittel, Auslöser Nebenaggregat
- 25: Anzeige
- 26: Halterung
- 27: Fixierung
- 28: Entnahmesicherung
- 29: Ladeeinrichtung
- 30: Kühleinrichtung
- 31: Detektionseinrichtung
- 32: Magnetfixierung
- 33: Magnetelement
- 34: Magnetelement
- 35: Magnetträger
- 36: Bedienseite
- 37: Werkstück
- 38: Vorschubrichtung
- 39: Bediener
- 40: Bedienfront

## Patentansprüche

1. Holzbearbeitungssystem aufweisend eine Holzbearbeitungsmaschine (2) mit einem angetriebenen und ggf. verstellbaren Bearbeitungswerkzeug (5), ggf. ein oder mehreren Nebenaggregaten (8), einer Maschinensteuerung (10) und einer maschinenfest an der Holzbearbeitungsmaschine (2) angeordneten Bedieneinrichtung (19), die eine Bedienmittelgruppe (21) aufweist, wobei die Holzbearbeitungsmaschine (2) einerseits für eine drahtlose Bedienung mit einem tragbaren Computer (14), insbesondere einem Tablet, und andererseits für eine Bedienung durch die Bedienmittelgruppe (21) ausgebildet ist, wobei die Holzbearbeitungsmaschine (2) eine Kommunikationsschnittstelle (13) für eine drahtlose Kommunikation mit dem tragbaren Computer (14) aufweist und die Bedienmittelgruppe (21) Bedienmittel (22,23,24) mit einer Auslösefunktion zum Aktivieren und Deaktivieren von sicherheitsrelevanten Komponenten, der Holzbearbeitungsmaschine (2) aufweist, wobei die Bedienmittel (22,23,24) für eine kontaktierende manuelle Bedienung vor Ort an der Holzbearbeitungsmaschine (2) ausgebildet sind, **dadurch gekennzeichnet, dass** die Bedieneinrichtung (19) außerhalb eines Gefahrenbereichs an der Holzbearbeitungsmaschine (2) positioniert ist und mittels einer Trageinrichtung (20) mit Abstand oberhalb eines Maschinentischs (4) der Holzbearbeitungsmaschine (2) angeordnet ist, wobei die Holzbearbeitungsmaschine (2) eine Halterung (26) für den tragbaren Computer (14) aufweist, wobei die Halterung (26) an der Bedieneinrichtung (19) angeordnet ist.

2. Holzbearbeitungssystem nach Anspruch 1, **dadurch gekennzeichnet, dass** das Holzbearbeitungssystem (1), insbesondere die Maschinensteuerung (10), einen Datenspeicher (11) mit einem gespeicherten maschinenseitigen Softwareprogrammprodukt (12) aufweist, welches Anweisungen enthält, die dazu ausgebildet sind, mittels der drahtlosen Kommunikation mit dem tragbaren Computer (14) auf der Maschinensteuerung (10) ein Steuerverfahren für die Holzbearbeitungsmaschine (2) auszuführen.

3. Holzbearbeitungssystem nach Anspruch 1 oder 2, **dadurch gekennzeichnet, dass** das Holzbearbeitungssystem (1) ein computerseitiges Softwareprogrammprodukt (18) umfasst, das Anweisungen enthält, die dazu ausgebildet sind, bei Ausführung auf dem tragbaren Computer (14) mittels der drahtlosen Kommunikation die Ausführung eines Steuerverfahrens an der Holzbearbeitungsmaschine (2) zu veranlassen.

4. Holzbearbeitungssystem nach Anspruch 3, **dadurch gekennzeichnet, dass** das Softwareprogrammprodukt (18) Softwarekomponenten für eine Einstellung des Bearbeitungswerkzeugs (5), der evtl. ein oder mehreren Nebenaggregate (8) und evtl. weiterer Komponenten der Holzbearbeitungsmaschine (2) ohne Auslösefunktion enthält.

5. Holzbearbeitungssystem nach einem der Ansprüche 1 bis 4, **dadurch gekennzeichnet, dass** ein Bedienmittel (22) zum Starten und Stoppen des Bearbeitungswerkzeugs (5), ein Bedienmittel (23) für einen Not-Halt und ggf. ein Bedienmittel (24) zur Funktionsauslösung eines Nebenaggregats (8) ausgebildet ist.

6. Holzbearbeitungssystem nach einem der Ansprüche 1 bis 5, **dadurch gekennzeichnet, dass** die Halterung (26) eine Fixierung (27) und/oder eine Entnahmesicherung (28) und/oder eine Energie-Ladeeinrichtung (29) und/oder eine Kühleinrichtung (30) für den tragbaren Computer (14) aufweist.

7. Holzbearbeitungssystem nach Anspruch 6, **dadurch gekennzeichnet, dass** die Fixierung (27) als Magnetfixierung (32) ausgebildet ist, die jeweils mehrere Magnetelemente (33) an der Halterung (26) und mehrere Magnetelemente (34) zur Anordnung am tragbaren Computer (14) aufweist, wobei die halterungseitigen und computerseitigen Magnetelemente (33,34) eine gleichartige und lineare oder flächige Verteilung aufweisen und zum Fixieren mit Magnetkraft zusammenwirken.

8. Holzbearbeitungssystem nach einem der Ansprüche 1 bis 7, **dadurch gekennzeichnet, dass** die Holzbearbeitungsmaschine (2), insbesondere die Bedieneinrichtung (19), eine Detektionseinrichtung (31) für die zulässige Entfernung des tragbaren Computers (14) von der Holzbearbeitungsmaschine (2) aufweist.

9. Holzbearbeitungssystem nach einem der Ansprüche 2 bis 8, **dadurch gekennzeichnet, dass** das maschinenseitige Softwareprogrammprodukt (12) eine Autorisierungs-Software aufweist und/oder das computerseitige Softwareprogrammprodukt (18) eine Wartungs-Software für die Holzbearbeitungsmaschine (2) aufweist und/oder das computerseitige Softwareprogrammprodukt (18) eine Schnittoptimierungs-Software und/oder eine Gestaltungs-Software und/oder Vertriebs-Software und/oder Planungs-Software aufweist und/oder die Softwareprogrammprodukte (12,18) eine Identifikations-Software aufweisen.

10. Holzbearbeitungssystem nach einem der Ansprüche 1 bis 9, **dadurch gekennzeichnet, dass** das Holzbearbeitungssystem (1) einen tragbaren Computer (14) umfasst.

11. Holzbearbeitungssystem nach Anspruch 10, **dadurch gekennzeichnet, dass** der tragbare Computer (14) einen Bildschirm (15), insbesondere einen Touchscreen, einen Datenspeicher (17) mit dem computerseitigen Softwareprogrammprodukt (18) und eine Kommunikationsschnittstelle (16) aufweist.

12. Verfahren zum Betrieb eines Holzbearbeitungssystems aufweisend eine Holzbearbeitungsmaschine (2) mit einem angetriebenen und ggf. verstellbaren Bearbeitungswerkzeug (5), ggf. ein oder mehreren Nebenaggregaten (8), einer Maschinensteuerung (10) und einer maschinenfest an der Holzbearbeitungsmaschine (2) angeordneten Bedieneinrichtung (19), die eine Bedienmittelgruppe (21) aufweist, wobei die Holzbearbeitungsmaschine (2) einerseits drahtlos über eine Kommunikationsschnittstelle (16) mittels eines tragbaren Computers (14), insbesondere eines Tablets, bedient wird und andererseits kontaktierend manuell vor Ort an der Holzbearbeitungsmaschine (2) mittels funktionsauslösender Bedienmittel (22,23,24) der Bedienmittelgruppe (21) zum Aktivieren und Deaktivieren von sicherheitsrelevanten Komponenten der Holzbearbeitungsmaschine (2) bedient wird, **dadurch gekennzeichnet, dass** die Bedieneinrichtung (19) außerhalb eines Gefahrenbereichs an der Holzbearbeitungsmaschine (2) positioniert ist und mittels einer Trageinrichtung (20) mit Abstand oberhalb eines Maschinentischs (4) der Holzbearbeitungsmaschine (2) angeordnet ist, wobei die Holzbearbeitungsmaschine (2) eine Halterung (26) für den tragbaren Computer (14) aufweist, wobei die Halterung (26) an der Bedieneinrichtung (19) angeordnet ist.

13. Betriebsverfahren nach Anspruch 12, **dadurch gekennzeichnet, dass** sicherheitsrelevante Funktionen der Holzbearbeitungsmaschine (2), insbesondere Starten und Stoppen des Bearbeitungswerkzeugs (5), ein Not-Halt und ggf. eine Funktion eines Nebenaggregats (8) durch die Bedienmittel (22,23,24) ausgelöst werden.

14. Betriebsverfahren nach Anspruch 12 oder 13, **dadurch gekennzeichnet, dass** Einstellungen der Holzbearbeitungsmaschine (2) ohne Auslösefunktion über den tragbaren Computer (14) vorgenommen werden.

## Claims

1. Woodworking system comprising a woodworking machine (2) with a driven and optionally adjustable machining tool (5), optionally one or more auxiliary units (8), a machine controller (10) and an operating device (19), which is arranged machine-fixedly on the woodworking machine (2) and which comprises an operating means group (21), wherein
the woodworking machine (2) is designed firstly for wireless operation with a portable computer (14), in particular a tablet, and secondly for operation by the operating means group (21), wherein the woodworking machine (2) comprises a communication interface (13) for wireless communication with the portable computer (14) and the operating means group (21) comprises operating means (22,23,24) with a triggering function for activating and deactivating safety-relevant components of the woodworking machine (2), wherein the operating means (22,23,24) are designed for contacting manual operation on site on the woodworking machine (2), **characterized in that**
the operating device (19) is positioned outside a danger zone on the woodworking machine (2) and is arranged by means of a supporting device (20) at a distance above a machine table (4) of the woodworking machine (2), wherein the woodworking machine (2) comprises a mount (26) for the portable computer (14), wherein the mount (26) is arranged on the operating device (19).

2. Woodworking system according to Claim 1, **characterized in that** the woodworking system (1), in particular the machine controller (10), comprises a data memory (11) with a stored machine-side software program product (12) containing instructions designed to carry out a control method for the woodworking machine (2) by means of the wireless communication with the portable computer (14) on the machine controller (10).

3. Woodworking system according to Claim 1 or 2, **characterized in that** the woodworking system (1) comprises a computer-side software program product (18) containing instructions designed to cause, when executed on the portable computer (14), by means of the wireless communication, a control method to be carried out on the woodworking machine (2).

4. Woodworking system according to Claim 3, **characterized in that** the software program product (18) contains software components for an adjustment of the machining tool (5), the possibly one or more auxiliary units (8) and possibly further components of the woodworking machine (2) without a triggering function.

5. Woodworking system according to any of Claims 1 to 4, **characterized in that** an operating means (22) is designed for starting and stopping the machining tool (5), an operating means (23) is designed for an emergency stop and optionally an operating means (24) is designed for functionally triggering an auxiliary unit (8).

6. Woodworking system according to any of Claims 1 to 5, **characterized in that** the mount (26) comprises a fixing (27) and/or a removal lock (28) and/or an energy charging device (29) and/or a cooling device (30) for the portable computer (14).

7. Woodworking system according to Claim 6, **characterized in that** the fixing (27) is designed as a magnetic fixing (32) comprising in each case a plurality of magnetic elements (33) on the mount (26) and a plurality of magnetic elements (34) for arrangement on the portable computer (14), wherein the mount-side and computer-side magnetic elements (33,34) have the same kind of a linear or planar distribution and cooperate for the purpose of fixing with magnetic force.

8. Woodworking system according to any of Claims 1 to 7, **characterized in that** the woodworking machine (2), in particular the operating device (19), comprises a detection device (31) for the permissible distance of the portable computer (14) from the woodworking machine (2).

9. Woodworking system according to any of Claims 2 to 8, **characterized in that** the machine-side software program product (12) comprises authorization software and/or the computer-side software program product (18) comprises maintenance software for the woodworking machine (2) and/or the computer-side software program product (18) comprises cut optimization software and/or design software and/or sales software and/or planning software and/or the software program products (12,18) comprise identification software.

10. Woodworking system according to any of Claims 1 to 9, **characterized in that** the woodworking system (1) comprises a portable computer (14).

11. Woodworking system according to Claim 10, **characterized in that** the portable computer (14) comprises a screen (15), in particular a touchscreen, a data memory (17) with the computer-side software program product (18), and a communication interface (16).

12. Method of operation of a woodworking system comprising a woodworking machine (2) with a driven and optionally adjustable machining tool (5), optionally one or more auxiliary units (8), a machine controller (10) and an operating device (19), which is arranged machine-fixedly on the woodworking machine (2) and which comprises an operating means group (21), wherein
the woodworking machine (2) firstly is operated wirelessly via a communication interface (16) by means of a portable computer (14), in particular a tablet, and secondly is operated in a contacting manner manually on site on the woodworking machine (2) by means of function-triggering operating means (22,23,24) of the operating means group (21) for activating and deactivating safety-relevant components of the woodworking machine (2), **characterized in that**
the operating device (19) is positioned outside a danger zone on the woodworking machine (2) and is arranged by means of a supporting device (20) at a distance above a machine table (4) of the woodworking machine (2), wherein the woodworking machine (2) comprises a mount (26) for the portable computer (14), wherein the mount (26) is arranged on the operating device (19).

13. Method of operation according to Claim 12, **characterized in that** safety-relevant functions of the woodworking machine (2), in particular starting and stopping the machining tool (5), an emergency stop and optionally a function of an auxiliary unit (8), are triggered by the operating means (22,23,24).

14. Method of operation according to Claim 12 or 13, **characterized in that** adjustments of the woodworking machine (2) are effected without a triggering function via the portable computer (14).

## Revendications

1. Système de travail du bois comprenant une machine (2) de travail du bois équipée d'un outil de travail (5) entraîné et optionnellement réglable, optionnellement d'une ou plusieurs unités auxiliaires (8), d'un système (10) de commande de machine et d'un dispositif de manœuvre (19) agencé de manière fixe sur la machine (2) de travail du bois, qui comprend un groupe (21) de moyens de manœuvre,
la machine (2) de travail du bois étant conçue, d'une part, pour une manœuvre sans fil avec un ordinateur portable (14), en particulier une tablette, et, d'autre part, pour une manœuvre par le groupe (21) de moyens de manœuvre, la machine (2) de travail du bois comprenant une interface de communication (13) pour une communication sans fil avec l'ordinateur portable (14) et le groupe (21) de moyens de manœuvre comprenant des moyens de manœuvre (22, 23, 24) avec une fonction de déclenchement pour activer et désactiver des composants importants pour la sécurité de la machine (2) de travail du bois, les moyens de manœuvre (22, 23, 24) étant conçus pour une manœuvre manuelle par contact sur place, sur la machine (2) de travail du bois, **caractérisé en ce que**
le dispositif de manœuvre (19) est positionné à l'extérieur d'une zone dangereuse sur la machine (2) de travail du bois et est agencé, au moyen d'un dispositif porteur (20), à distance au-dessus d'une table de machine (4) de la machine (2) de travail du bois, la machine (2) de travail du bois comprenant un support (26) pour l'ordinateur portable (14), le support (26) étant agencé sur le dispositif de manœuvre (19).

2. Système de travail du bois selon la revendication 1, **caractérisé en ce que** le système (1) de travail du bois comprend en particulier le système (10) de commande de machine, une mémoire de données (11) comprenant un produit logiciel enregistré côté machine (12) qui contient des instructions conçues pour mettre en œuvre un procédé de commande pour la machine (2) de travail du bois sur le système (10) de commande de machine, au moyen de la communication sans fil avec l'ordinateur portable (14).

3. Système de travail du bois selon la revendication 1 ou la revendication 2, **caractérisé en ce que** le système (1) de travail du bois comprend un produit logiciel (18) côté ordinateur qui contient des instructions conçues pour, lors de leur exécution sur l'ordinateur portable (14) au moyen d'une communication sans fil, lancer l'exécution d'un procédé de commande sur la machine (2) de travail du bois.

4. Système de travail du bois selon la revendication 3, **caractérisé en ce que** le produit logiciel (18) comprend des composants logiciels pour un réglage de l'outil de travail (5), qui comprend optionnellement une ou plusieurs unités auxiliaires (8) et optionnellement d'autres composants de la machine (2) de travail du bois sans fonction de déclenchement.

5. Système de travail du bois selon l'une des revendications 1 à 4, **caractérisé en ce qu'**un moyen de manœuvre (22) est prévu pour démarrer et arrêter l'outil de travail (5), un moyen de manœuvre (23) pour un arrêt d'urgence et, optionnellement, un moyen de manœuvre (24) pour déclencher le fonctionnement d'une unité auxiliaire (8).

6. Système de travail du bois selon l'une des revendications 1 à 5, **caractérisé en ce que** le support (26) comprend une fixation (27) et/ou un dispositif de sécurité contre le retrait (28) et/ou un dispositif de chargement d'énergie (29) et/ou un dispositif de refroidissement (30) pour l'ordinateur portable (14).

7. Système de travail du bois selon la revendication 6, **caractérisé en ce que** la fixation (27) est réalisée sous forme de fixation magnétique (32) qui comprend plusieurs éléments magnétiques (33) sur le support (26) et plusieurs éléments magnétiques (34) destinés à être agencés sur l'ordinateur portable (14), les éléments magnétiques côté support et côté ordinateur (33, 34) présentant une répartition similaire et linéaire ou plane et coopérant pour la fixation par force magnétique.

8. Système de travail du bois selon l'une des revendications 1 à 7, **caractérisé en ce que** la machine (2) de travail du bois, en particulier le dispositif de manœuvre (19), comprend un dispositif de détection (31) de la distance admissible entre l'ordinateur portable (14) et la machine (2) de travail du bois.

9. Système de travail du bois selon l'une des revendications 2 à 8, **caractérisé en ce que** le produit logiciel côté machine (12) comprend un logiciel d'autorisation et/ou le produit logiciel (18) côté ordinateur comprend un logiciel de maintenance pour la machine (2) de travail du bois et/ou le produit logiciel (18) côté ordinateur comprend un logiciel d'optimisation de coupe et/ou un logiciel de conception et/ou un logiciel de distribution et/ou un logiciel de planification et/ou les produits logiciels (12, 18) comprennent un logiciel d'identification.

10. Système de travail du bois selon l'une des revendications 1 à 9, **caractérisé en ce que** le système (1) de travail du bois comprend un ordinateur portable (14).

11. Système de travail du bois selon la revendication 10, **caractérisé en ce que** l'ordinateur portable (14) comprend un écran (15), en particulier un écran tactile, une mémoire de données (17) avec le produit logiciel (18) côté ordinateur et une interface de communication (16).

12. Procédé pour l'exploitation d'un système de travail du bois comprenant une machine (2) de travail du bois équipée d'un outil de travail (5) entraîné et optionnellement réglable, optionnellement d'une ou plusieurs unités auxiliaires (8), d'un système (10) de commande de machine et d'un dispositif de manœuvre (19) agencé de manière fixe sur la machine (2) de travail du bois, qui comprend un groupe (21) de moyens de manœuvre, la machine (2) de travail du bois étant manœuvrée, d'une part, sans fil via une interface de communication (16) au moyen d'un ordinateur portable (14), en particulier une tablette, et, d'autre part, manuellement par contact sur place sur la machine (2) de travail du bois par des moyens de manœuvre (22, 23, 24) du groupe (21) de moyens de manœuvre qui déclenchent des fonctions pour activer et désactiver des composants importants pour la sécurité de la machine (2) de travail du bois, **caractérisé en ce que**
le dispositif de manœuvre (19) est positionné à l'extérieur d'une zone dangereuse sur la machine (2) de travail du bois et est agencé, au moyen d'un dispositif porteur (20), à distance au-dessus d'une table de machine (4) de la machine (2) de travail du bois, la machine (2) de travail du bois comprenant un support (26) pour l'ordinateur portable (14), le support (26) étant agencé sur le dispositif de manœuvre (19).

13. Procédé de fonctionnement selon la revendication 12, **caractérisé en ce que** les fonctions importantes pour la sécurité de la machine (2) de travail du bois, en particulier le démarrage et l'arrêt de l'outil de travail (5), un arrêt d'urgence et, optionnellement, une fonction d'une unité auxiliaire (8) sont déclenchées par les moyens de manœuvre (22, 23, 24).

14. Procédé de fonctionnement selon la revendication 12 ou la revendication 13, **caractérisé en ce que** les réglages de la machine (2) de travail du bois sont effectués sans fonction de déclenchement via l'ordinateur portable (14).
